# DEMANDE DE BREVET EUROPEEN

(11) **EP 3 382 628 A1**
(43) Date de publication de la demande: **03.10.2018**
(21) Numéro de dépôt: 18163668.9
(22) Date de dépôt: 23.03.2018
(51) Int. Cl.: G06Q 20/04, G06Q 20/32

(54) **PROCÉDÉ DE TRAITEMENT DE DONNÉES PAR UN TERMINAL DE PAIEMENT, TERMINAL DE PAIEMENT ET PROGRAMME CORRESPONDANT**

(30) Priorité: 31.03.2017 FR 1752779
(71) Demandeur: INGENICO GROUP, 75015 Paris (FR)
(72) Inventeur: PAVAGEAU, Ste phane, 26600 LA ROCHE DE GLUN (FR); DEVORNIQUE, Roger, 26000 VALENCE (FR)
(74) Mandataire: Vidon Brevets & Stratégie

(57) **Abrégé**

L'invention se rapporte à un procédé de traitement transactionnel, procédé du type consistant à transmettre, à un terminal de communication (TC) un reçu relatif à une transaction de paiement au cours de la mise en oeuvre de cette transaction de paiement par un terminal de paiement (TP). Un tel procédé comprend, au niveau du terminal de paiement :
- une étape d'obtention (E01) d'une donnée représentative d'une fin de transaction (DRFT) ;
- une étape de construction (E02) d'une structure de données (StrD) en fonction d'une donnée de ladite transaction (DRFT), ladite structure de données étant représentative d'un reçu ;
- une étape de transmission (E03) d'un signal (S) comprenant au moins ladite structure de donnée (StrD) ;
- postérieurement à l'étape de transmission (E03), une étape de finalisation (E04) de la transaction, comprenant la transmission d'une donnée de finalisation à transmettre à un utilisateur.

## Description

### 1. Domaine

Le domaine de l'invention est celui de la communication d'information de paiement. Plus particulièrement, l'invention se rapporte à une technique de communication d'information de paiement par l'utilisation d'un lien de type radio entre un terminal de paiement et un terminal de communication.

### 2. Art antérieur

La possibilité de réaliser un paiement à l'aide d'un terminal de communication de type smartphone a été largement documentée, particulièrement depuis que les terminaux de communication grand publics intègrent des environnements de traitement des données sécurisés. Ces environnements sécurisés comprennent un processeur et/ou une mémoire sécurisée, et permettent de traiter et de stocker de l'information sous une forme sécurisée. Ceci est avantageux, par exemple pour pouvoir traiter des données confidentielles de type carte de crédit, carte de paiement et données biométriques.

Parmi les nombreuses méthodes de paiement qui ont été divulguées, une part substantielle d'entre elles utilisent une application spécifique, installée sur le smartphone, et qui permet de sauvegarder et d'utiliser une pluralité de carte de paiement : les données de la carte de paiement sont saisies, ou prises en photos à l'aide du terminal de communication et sauvegardées, au moins partiellement, au sein de l'environnement sécurisé du terminal de communication de l'utilisateur.

Lorsqu'il souhaite utiliser son terminal de communication pour effectuer un paiement au près d'un commerçant, l'utilisateur oeuvre l'application idoine sur son terminal de paiement, sélectionne la carte de paiement qu'il souhaite utiliser et valide le paiement. Une telle méthode de paiement est par exemple décrite dans la demande de brevet américain US20140244495. La plupart du temps, comme dans US20140244495, les informations de paiement sont transmises au terminal de paiement par le terminal de communication de l'utilisateur. Plusieurs méthodes de transmission sont possibles, en fonction des matériels disponibles sur le terminal de communication de l'utilisateur:
- par exemple l'utilisation d'une transmission radio très courte portée de type NFC;
- ou encore l'utilisation d'un dispositif spécifique, adjoint au terminal de communication, pour imiter la présence d'une carte de paiement à bande magnétique.

Toujours est-il que la transmission des données par le terminal de communication au terminal de paiement est effectuée comme si l'utilisateur utilisait une carte de paiement classique et non son terminal de communication. L'utilisateur est ensuite éventuellement inviter à saisir un code d'identification personnel (de type code PIN) sur le terminal de paiement du commerçant pour valider la transaction. En règle générale, la transaction est mise en oeuvre de manière traditionnelle, par le terminal de paiement du commerçant : les données de transaction passent par la banque du commerçant, le réseau de l'émetteur de la carte de paiement, puis la banque de l'utilisateur afin que ces acteurs, collectivement, valident la transaction de paiement.

Lorsque la transaction de paiement est validée, un reçu de paiement est imprimé par le terminal de paiement ou une caisse enregistreuse et donné au client par le commerçant. Dans un certain nombre de situations, il est possible cependant qu'un tel reçu ne puisse pas être imprimé. Dès lors l'utilisateur se trouve dans une situation déplaisante, car bien qu'ayant réglé avec un dispositif (le smartphone) dans lequel il peut avoir confiance, il n'a pas d'assurance que le montant total des achats réglés avec le smartphone soit identique à celui prévu initialement.

Il semble prévu, dans la demande de brevet US20140244495, que l'utilisateur puisse disposer d'un reçu de paiement dans son terminal de communication. En revanche, aucune technique de transmission de cette information au terminal de communication n'est divulguée, de sorte qu'il n'est pas possible de savoir comment cette information est transmise au terminal de communication.

En règle générale, lorsque le client paie auprès d'un commerçant physique avec une carte bancaire ou un terminal de communication, deux types de documents sont imprimés par le terminal de paiement (ou la caisse enregistreuse) : une facture, comprenant une liste des produits achetés et comprenant également une indication sur les garanties éventuelles apportées aux produits de cette liste ; et un reçu de paiement par carte bancaire, ce reçu de paiement étant utilisé pour apporter la preuve du paiement par l'intermédiaire de la carte bancaire : ce reçu de paiement n'a pas de valeur au niveau de la garantie. La demande de brevet US20140244495 ne distingue pas quel type de "document" est présenté au smartphone de l'utilisateur. Il s'agit vraisemblablement d'une liste de produits achetés, comme cela est indiqué à plusieurs reprises notamment sur les figures 12. Or, comme indiqué précédemment, ces documents n'ont pas les mêmes valeurs juridiques et ne poursuivent pas les mêmes objectifs.

D'une manière générale, il ressort des différentes méthodes de paiement par l'intermédiaire d'un terminal de communication que le processus final de paiement (c'est à dire la délivrance des documents justificatifs au client) ne fait pas partie des domaine d'intérêt des industriels.

Il existe donc un besoin de fournir une technique de transmission de reçu de paiement au terminal de communication de l'utilisateur qui a effectué un paiement à l'aide d'un terminal de communication.

### 3. Résumé

La technique proposée ne présente pas ces inconvénients de l'art antérieur. Plus particulièrement, la technique proposée met en oeuvre un principe de transmission immédiate, à la transaction, d'un signal représentatif de la fin de transaction, signal qui est directement transmis au terminal de communication

Il est ainsi décrit un Procédé de traitement transactionnel, procédé du type consistant à transmettre, à un terminal de communication un reçu relatif à une transaction de paiement au cours de la mise en oeuvre de cette transaction de paiement par un terminal de paiement, procédé caractérisé en ce qu'il comprend, au niveau du terminal de paiement :
- une étape d'obtention d'une donnée représentative d'une fin de transaction ;
- une étape de construction d'une structure de données en fonction d'une donnée de ladite transaction et représentative d'un reçu ;
- une étape de transmission d'un signal comprenant au moins ladite structure de donnée ;
- postérieurement à l'étape de transmission, une étape de finalisation de la transaction, comprenant la transmission d'une donnée de finalisation à transmettre à un utilisateur.

Ainsi, contrairement aux techniques antérieures, on assure que le terminal de communication, qui transmet des données de paiement au terminal de paiement disposer, immédiatement à la fin de la transaction, un indicateur représentatif de la transaction : le terminal de communication est ainsi informé en temps réel ou quasi réel, de la finalisation de la transaction et l'utilisateur est en quelque sorte rassuré d'avoir une information à propos de cette transaction.

Selon un mode de réalisation particulier, l'étape de construction d'une structure de données en fonction d'une donnée de ladite transaction comprend :
- une étape de détermination d'une adresse de localisation de ressource à laquelle ledit reçu est disponible en fonction de la donnée représentative d'une fin de transaction ;
- une étape d'insertion de ladite adresse de localisation de ressource au sein d'un enregistrement ;

Ainsi, au lieu de construire lui-même le reçu, le terminal de paiement se contente de fournir une adresse à laquelle le reçu peut être obtenu. Ceci est intéressant par exemple dans les cas où le terminal de paiement dispose de peu de ressources de calcul.

Selon un mode de réalisation particulier, ledit enregistrement est un enregistrement NDEF.

Ainsi, le terminal de communication est plus à même de recevoir des données qu'il sait traiter, puisque qu'un enregistrement NDEF est une norme connue.

Selon un mode de réalisation particulier, l'étape de détermination d'une adresse de localisation de ressource comprend :
- une étape d'obtention d'un préambule d'adresse de localisation de ressource ;
- une étape d'obtention, à partir de la donnée de ladite transaction, d'un identifiant de reçu ;
- une étape de concaténation du préambule de d'adresse de localisation de ressource et de identifiant de reçu, délivrant l'adresse de localisation de ressource.

Ainsi, la division en plusieurs étapes de la construction de l'adresse permet au commerçant de paramétrer ces divers éléments, afin qu'il puisse pointer vers un serveur que le commerçant maîtrise et avec lequel il est en mesure de fournir, au client, une personnalisation du reçu.

Selon une caractéristique particulière, préalablement à une étape d'insertion de ladite adresse de localisation de ressource au sein d'un enregistrement, le procédé comprend une étape de chiffrement d'au moins une portion de l'adresse de localisation de ressource à l'aide d'une clé publique du terminal de communication.

Ainsi, seul le terminal de communication, qui dispose de sa clé privée, est en mesure d'accéder à ce reçu. Le terminal de paiement garantit ainsi la confidentialité et l'intégrité des informations transmises au terminal de communication, car seul ce dernier est en mesure d'ne prendre connaissance.

Selon un mode de réalisation particulier, le procédé comprend préalablement à l'étape d'obtention de la donnée représentative d'une fin de transaction :
- une étape d'émission, à destination d'un terminal de communication d'un utilisateur, d'une requête d'obtention de données de paiement ;
- une étape de réception, en provenance du terminal de communication, des données de paiement ;
- une étape de création d'une transaction de paiement, à l'aide desdites données de paiement et d'au moins une donnée dudit terminal de paiement ;
- une étape de validation de la transaction de paiement, délivrant la donnée représentative d'une fin de transaction.

Ainsi, la transmission de la donnée représentative du reçu au terminal de communication est mise en oeuvre en même temps que la transaction de paiement elle-même.

Selon un mode de réalisation particulier, le procédé comprend en outre :
- une étape de transmission, à un serveur marchand, de l'identifiant de reçu ;
- une étape de transmission, au serveur marchand, de données de la transaction, appartenant au groupe comprenant :
   - le montant de la transaction ;
   - l'objet de la transaction ;
   - le bénéficiaire de la transaction ;
   - la date et l'heure de la transaction ;
   - le lieu de la transaction ;
   - au moins une donnée de paiement.

Ainsi, le serveur marchand est en mesure de construire un reçu à façon, c'est-à-dire adapté aux attentes du commerçant pour communiquer efficacement avec ses clients, notamment via l'utilisation d'un reçu adapté à la situation, reçu qui peut être construit en utilisant des ressources de traitement bien supérieures à celles d'un terminal de paiement, avec un résultat moins déceptif pour le client.

Selon un mode de réalisation particulier, ledit reçu est un reçu de défiscalisation transmis à la suite d'un paiement représentatif d'un don réalisé sur le terminal de paiement, ledit terminal de paiement étant un terminal autonome sans surveillance.

Ainsi, l'utilisateur qui souhaite effectuer un paiement par l'intermédiaire d'un terminal ou d'une borne autonome est immédiatement averti du montant de la transaction et/ou de son caractère défiscalisable, sans nécessiter la saisie de données complémentaire, comme ses coordonnées personnelles.

Selon un autre aspect, il est également décrit un terminal de paiement, comprenant des moyens de mise en oeuvre d'un procédé de traitement transactionnel et notamment des moyens de transmission, à un terminal de communication, d'un reçu relatif à une transaction de paiement. Un tel terminal de paiement comprend :
- des moyens d'obtention d'une donnée représentative d'une fin de transaction ;
- des moyens de construction d'une structure de données en fonction d'une donnée de ladite transaction ;
- des moyens de transmission d'un signal comprenant au moins ladite structure de donnée ;
- des moyens de finalisation de la transaction, comprenant des moyens de transmission d'une donnée de finalisation à un utilisateur.

Selon une implémentation préférée, les différentes étapes des procédés selon la technique proposée sont mises en oeuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus ainsi que les différentes caractéristiques qui les constituent, sont combinables entre eux pour la mise en oeuvre de la technique proposée.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente les différentes étapes de traitement selon l'invention ;
- La figure 2 présente les éventuelles étapes préalables au traitement selon un mode de réalisation ;
- La figure 3 décrit l'obtention d'un reçu de défiscalisation selon un mode de réalisation ;
- La figure 4 divulgue un terminal de communication de manière synthétique ;
- La figure 5 divulgue un terminal de paiement de manière synthétique.

### 5. Description

### 5.1. Principe général

Le principe général de la présente technique consiste à transmettre l'information de paiement par l'intermédiaire d'un signal de type NFC au terminal de communication de l'utilisateur. Cette transmission d'un signal NFC peut être réalisée en plus ou à la place de l'impression du reçu de paiement par le terminal de paiement. La transmission de ce signal de type NFC à destination du terminal de communication est effectuée en utilisant le même matériel que celui utilisé par le terminal de communication pour transmettre les données de paiement (par exemple les données de carte bancaire) au terminal de paiement. Alternativement (ou de manière complémentaire), un signal de type BlueTooth Low Energy (BLE) peut également être transmis par le terminal de paiement à destination du terminal de communication.

L'objectif, quel que soit le type de signal employé, est de transmettre quasi immédiatement, au terminal de communication, les données représentatives d'un reçu de paiement et/ou d'une facture et/ou d'un reçu de défiscalisation. La transmission immédiate est importante : il n'est pas question dans la présente de requérir une action complémentaire de la part de l'utilisateur pour effectuer cette transmission. En effet, selon l'art antérieur, une manière "simple" de réaliser une transmission d'une facture est de requérir la saisie par l'utilisateur d'une adresse de courrier électronique, adresse à laquelle le commerçant pourrait transmettre cette facture. Or, la saisie supplémentaire et la transmission, par l'utilisateur (ou par le commerçant), d'une telle donnée peut poser problème et/ou peut ne pas être possible. Elle peut poser problème car en règle générale la transmission du courrier électronique auquel cette facture est adjointe prend un temps plus ou moins important ; il en découle que l'utilisateur n'est pas immédiatement informé du montant de l'achat; par ailleurs, cette transmission par courrier électronique ne concerne que la facture d'achat. Le reçu de paiement par carte bancaire n'est pas transmis par courrier électronique et reste généralement imprimé par le terminal de paiement. Par ailleurs, les solutions qui viennent d'être décrites s'appliquent lorsque le terminal de paiement est géré par un commerçant physiquement présent dans le commerce : ces solutions ne sont pas applicables par exemple lorsque le terminal de paiement est autonome (par exemple un terminal de paiement pour station essence "automatique") : dans ce type de situation, lorsque le terminal de paiement ne dispose plus de papier pour réaliser l'impression du reçu de paiement, aucun reçu n'est imprimé et l'utilisateur est donc confronté à la situation désagréable dans laquelle il n'est pas assuré que le montant qui va être débité correspond au montant affiché sur le terminal. De plus, l'éventuelle saisie, par l'utilisateur d'une adresse de courrier électronique nécessite que le terminal de paiement autonome soit muni de moyens de saisie d'une telle information, ce qui n'est pas toujours le cas.

Au contraire, selon l'invention, on transmet quasi immédiatement, au terminal de communication de l'utilisateur, les données nécessaires : ce sont soit les données du reçu de paiement (ou facture ou reçu de défiscalisation), soit des données permettant d'accéder à ce reçu de paiement. À cette fin, selon l'invention, le terminal de paiement, à la réception d'une indication de finalisation de la transaction (provenant d'un serveur transactionnel), créé une structure de données particulière : cette structure de données particulière comprend à minima un identifiant, éventuellement dérivé de la transaction. Cette structure de données est, selon les modes de réalisation, insérée dans un enregistrement de données particulier qui est lui-même transmis, à l'aide du signal idoine, au terminal de communication.

A réception de ce signal, le terminal de communication déclenche la mise en oeuvre d'un processus de réception particulier, processus qui dépend essentiellement de la technologie employée pour transmettre le signal au terminal de communication. Comme cela est décrit par la suite dans la cadre d'un mode de réalisation particulier, un signal de type NFC est immédiatement transmis au terminal de communication, dès la fin de la transaction.

Cependant, les inventeurs ont constaté qu'en environnement opérationnel, la transmission immédiate de ce signal au terminal de communication devait être réalisée selon une procédure particulière. L'explication est la suivante : lorsqu'un utilisateur paie à l'aide d'un terminal de communication (ou d'une carte de paiement sans contact), il est invité à apposé son moyen de paiement sur le terminal de paiement : en effet, à la différence de ce qui est communément avancé par les industriels, l'interface NFC des terminaux de paiement n'est utilisable, en conditions opérationnelles, qu'à très faible distance, entrainant généralement une mise en contact du moyen de paiement avec le terminal de paiement. Lorsque la transaction est achevée (par le paiement ou par un refus de transaction), l'écran du terminal de paiement affiche une indication de fin de transaction (par exemple un logo de validation). Lorsque l'utilisateur voit cette information affichée à l'écran, il retire son moyen de paiement. A partir de ce retrait, il n'est généralement plus possible de transmettre une quelconque information au terminal de communication, qui se trouve trop éloigné du terminal de paiement. La situation qui vient d'être décrite est également vraie en cas d'impression d'un reçu de paiement : dès le début de l'impression, l'utilisateur, par réflexe, retire son moyen de paiement du terminal de paiement, auquel il n'est plus possible d'avoir accès.

Ainsi, il est nécessaire, pour une mise en oeuvre réussie de la transmission d'information au terminal de communication de l'utilisateur, de résoudre ce problème. Selon l'invention, la solution consiste en l'utilisation d'une commande de création de reçu de paiement et une commande de transmission de reçu de paiement, commandes qui sont mise en oeuvre successivement, dès l'acceptation ou le refus de la transaction. Ces deux commandes sont intercalées, avant l'affichage ou l'impression d'une quelconque information par le terminal de paiement.

Plus particulièrement, ces deux commandes (ou sous commandes) sont mises en oeuvre des réceptions, en provenance du serveur transactionnel (ou en provenance du terminal de paiement lui-même, lorsque la transaction est effectuée localement, i.e. sans confirmation auprès d'un serveur transactionnel), de l'acceptation ou du refus de la transaction.

Ainsi, on maximise la probabilité de présence du terminal de communication de l'utilisateur : en effet, tant que l'utilisateur ne reçoit pas de confirmation du paiement par le terminal de paiement, il n'est pas incité à retirer le moyen de paiement (le terminal de communication) utilisé et ainsi il est possible de transmettre un signal à ce moyen de paiement.

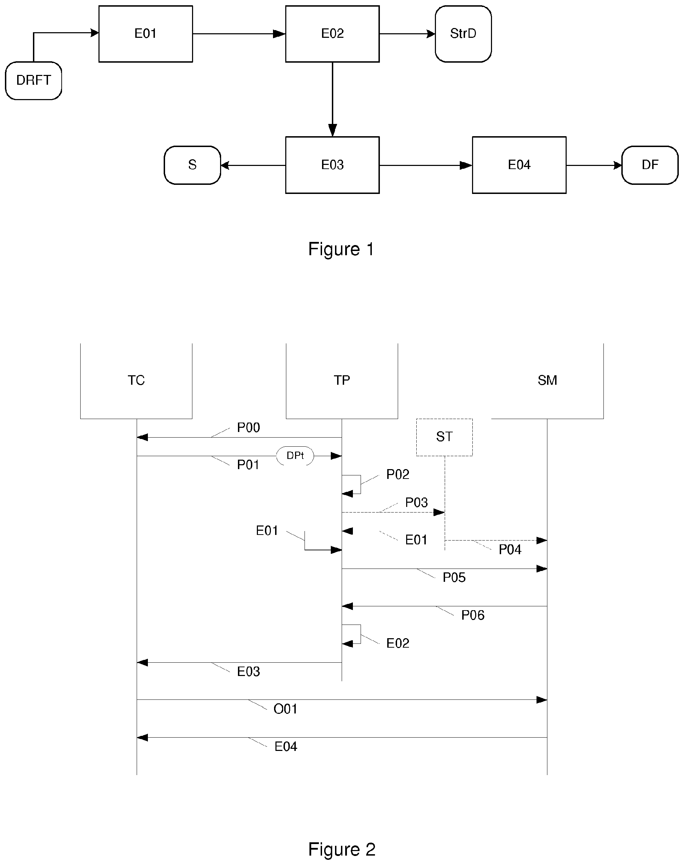

D'une manière générale, en relation avec la figure 1, le procédé de transmission de données de l'invention comprend donc :
- une étape de réception (E01) d'une donnée représentative d'une fin de transaction (DRFT) ;
- une étape de construction (E02) d'une structure de données (StrD) en fonction d'une donnée de ladite transaction (DRFT) ;
- une étape de transmission (E03) d'un signal (S) comprenant au moins ladite structure de donnée (StrD) ;
- une étape de finalisation (E04) de la transaction, comprenant la transmission d'une donnée de finalisation (DF) à transmettre à l'utilisateur.

La réception de la donnée représentative d'une fin de transaction est l'élément déclenchant la mise en oeuvre de la technique proposée. Cependant, afin d'accélérer le processus, certaines des données qui sont insérées dans la structure de données peuvent être créées en avance, en fonction des modes de réalisation, comme cela est explicité par la suite.

La construction de la structure de donnée (représentative d'un reçu de paiement ou d'un reçu de défiscalisation ou d'une facture) est principalement réalisée en fonction du numéro de la transaction. Dans un mode de réalisation particulier, la structure de données ne comprend qu'une donnée représentative ou dépendante du numéro de transaction lui-même. Plus particulièrement, dans un mode de réalisation spécifique, un chiffrement du numéro de transaction est effectué en utilisant une clé publique fournie par le terminal de communication lors de la transaction. Cette donnée chiffrée est insérée dans la structure de données puis transmise au terminal de communication (un signal est formé, notamment à l'aide de la structure de données).

La donnée de finalisation peut être soit une donnée à afficher à l'écran du terminal de paiement (ou à un autre écran connecté directement ou indirectement au terminal de paiement). Il peut s'agir par exemple d'une donnée déclenchant l'affichage d'un logo sur l'écran ou encore d'une donnée déclenchant l'impression (physique) d'une facture ou encore une donnée déclenchant l'émission d'un son représentatif d'une fin de transaction.

### 5.2. Description d'un mode de réalisation

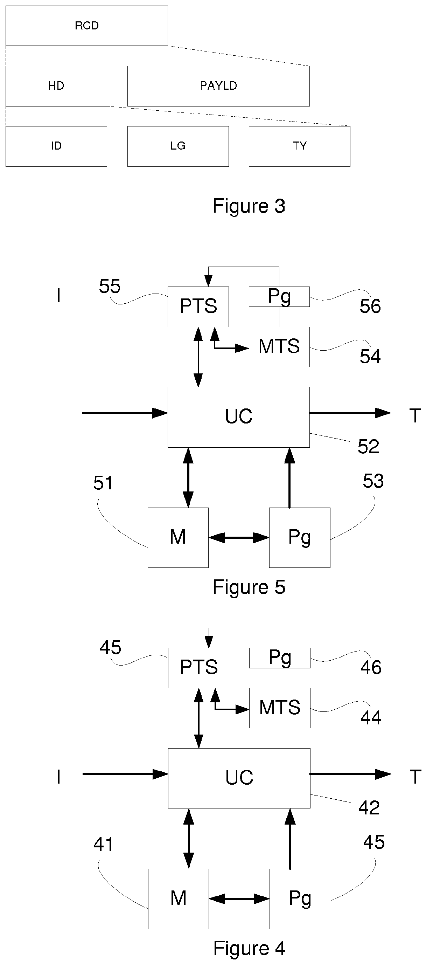

Dans ce mode de réalisation, il est décrit, en relation avec les figures 2 et 3, une implémentation de la technique préalablement décrite dans la cadre du transfert d'un reçu de défiscalisation, attestant d'un don réalisé au profit d'une association ou d'une cause ouvrant droit à défiscalisation. En effet, lors d'un paiement réalisé par un terminal de communication (NFC ou BLE) sur une borne interactive autonome ou un objet de collecte autonome sans moyen d'impression, il n'est pas possible de recevoir un quelconque reçu de paiement ou de défiscalisation (cas des dons aux organisations caritatives). Pour recevoir un tel reçu (de paiement ou de défiscalisation), l'utilisateur doit se connecter sur le site du commerçant et/ou de l'organisme réalisant la campagne et effectuer une demande de réception.

La technique décrite précédemment est utilisée pour transmettre quasi immédiatement au détenteur du terminal de communication ayant effectué le paiement, ce reçu de paiement et/ou ce reçu de défiscalisation. On se focalise dans ce mode de réalisation, sur l'utilisation de la technologie NFC comprenant notamment l'utilisation d'enregistrements de type NDEF. Le procédé comprend, tel que décrit en relation avec la figure 2 :
- une étape d'émission (P00), à destination d'un terminal de communication (TC) d'un utilisateur, d'une requête d'obtention de données de paiement (DPt) ;
- une étape de réception, en provenance du terminal de communication (TC), des données de paiement (DPt) ;
- une étape de création (P02), par le terminal de paiement (TP), d'une transaction de paiement, à l'aide desdites données de paiement (DPt) et d'au moins une donnée dudit terminal de paiement ;
- une éventuelle étape de communication (P03) avec un serveur transactionnel (ST), comprenant la transmission d'une information de transaction et éventuellement la réception (E01) d'une indication de fin de transaction ; lorsqu'aucune communication avec un serveur n'est requise (transaction hors ligne), le terminal de paiement (TP) détermine seul la fin de la transaction ;
- une étape de validation (P05) de la transaction de paiement, auprès d'un serveur (SM) : cette validation peut entrainer la délivrance (P06) de la donnée représentative d'une fin de transaction (DRFT), bien que cette donnée représentative d'une fin de transaction (DRFT) puisse aussi être déterminée par le terminal de paiement (TP) lui-même ;
- une étape de construction (E02) d'une structure de données (StrD) en fonction d'une donnée de ladite transaction (DRFT) ;
- une étape de transmission (E03) d'un signal (S) comprenant au moins ladite structure de donnée (StrD), au terminal de communication (TC) ;
- une étape d'obtention (O1), par le terminal de communication, auprès du serveur marchand (SM), du reçu, à l'aide des données de la structure de données ;
- postérieurement à l'étape de transmission (E03), une étape de finalisation (E04) de la transaction, comprenant la transmission d'une donnée de finalisation à transmettre à un utilisateur.

Les étapes de validation de la transaction et de délivrance de la donnée de fin de transaction peuvent être l'occasion, pour le terminal de paiement, de transmettre des données utiles à la conception du reçu par le serveur marchand.
- une étape de transmission, au serveur marchand (SM), de l'identifiant de reçu (IdRcpt) ;
- une étape de transmission, au serveur marchand (SM), de données de la transaction, appartenant au groupe comprenant :
   - le montant de la transaction ;
   - l'objet de la transaction ;
   - le bénéficiaire de la transaction ;
   - la date et l'heure de la transaction ;
   - le lieu de la transaction ;
   - au moins une donnée de paiement (DPt).

Ces données permettent au serveur marchand de générer, en avance ou à la demande (i.e. sur requête reçu du terminal de communication), le reçu demandé, en y adjoignant ses propres données (données d'identité du marchand ou de l'organisme de don par exemple).

Dans ce mode de réalisation, le terminal de paiement reçoit (détermine) une donnée représentative de la fin de la transaction de paiement réalisée par l'utilisateur à l'aide de son terminal de communication. Pour effectuer un tel paiement, l'utilisateur a, par exemple, utilisé une application de type portefeuille électronique (Wallet), lancée sur son terminal de communication. Cette application lui a permis de sélectionner une carte de paiement à utiliser pour effectuer le paiement (s'il possède plusieurs cartes de paiement) et éventuellement confirmer le paiement en saisissant un code d'identification personnel (de type code PIN) au sein de l'application de portefeuille.

Les données de carte bancaire ont été au moins partiellement transférées au terminal de paiement lorsque l'utilisateur a apposé son terminal de communication sur le terminal de paiement. Le terminal de paiement effectue le traitement de la transaction de paiement en fonction des données reçues par le terminal de communication et les biens, services achetés et/ou dons réalisés par l'utilisateur. Ce traitement comprend la génération d'un identifiant de transaction de paiement, identifiant qui permet de distinguer cette transaction de manière unique parmi l'ensemble des transactions effectuées.

Le terminal de paiement, sur la base de cet identifiant de transaction, construit une structure de données comprenant au moins une donnée qui est extraite et/ou qui est liée à cet identifiant de transaction.

Dans un premier cas, une donnée dérivée de l'identifiant de transaction est calculée puis chiffrée. Cette donnée dérivée est par exemple le résultat d'une fonction de hachage effectuée sur la base du numéro de transaction. Cette donnée dérivée est ensuite chiffrée, par exemple en utilisant une clé publique (reçue du terminal de communication par exemple). La donnée dérivée chiffrée est alors insérée dans une structure de données représentative d'un enregistrement de transmission de données. L'enregistrement de transmission de donnée est par exemple un enregistrement NDEF (de l'anglais pour "NFC Data Exchange Format", format d'échange de données NFC). Cet enregistrement, comme cela est décrit par la suite fait lui-même partie d'un message NDEF comprenant potentiellement une pluralité d'enregistrements.

Dans un deuxième cas, une donnée externe est obtenue, sur la base de l'identifiant de transaction. Cette donnée externe est délivrée par le commerçant : le commerçant utilise le numéro de transaction pour générer un identifiant unique, qui lui est propre, et transmettre cet identifiant unique au terminal de paiement, éventuellement accompagné de données complémentaires. Comme dans le cas précédent, l'identifiant unique est chiffré et inséré dans une structure de données représentative d'un enregistrement de transmission de données. L'enregistrement de transmission de donnée est par exemple un enregistrement NDEF.

Selon un mode de réalisation spécifique, cet identifiant unique est accolé à un préambule d'une adresse de localisation de ressources (de type URL) et constitue ainsi un lien, permettant d'accéder à une ressource identifiée par l'identifiant unique (dans ce cas l'identifiant unique n'est pas nécessairement chiffré). Un préambule d'adresse de localisation de ressource prend par exemple la forme suivante : « https://receipts.foundation.com/id= ». Pour réduire la taille du préambule, un préambule réduit de type « tiny url », ce qui permet avantageusement d'utiliser un nombre réduit d'enregistrements NDEF d'une part et donc d'accélérer la transmission de l'information par voie NFC. La figure 3 présente un exemple d'enregistrement NDEF :
Un tel enregistrement (RCD) comprend un entête (HD) comprenant un identifiant (ID), une longueur (LG) et un type (TY) : dans cette implémentation le type est « type URI » défini par la RFC 3986. L'identifiant (ID) est égal à 0x04. La longueur est fonction de la longueur de l'URL (PAYLD). L'URL, quant à elle est plutôt une URL réduite, de type « tiny », permettant d'y accoler l'identifiant unique, tout en restant dans une longueur totale de l'enregistrement proche de 48 octets. L'enregistrement NDEF est inséré dans un message NDEF. L'objectif étant de minimiser le message NDEF afin d'accélérer sa transmission à la fin de la transaction.

Dans un deuxième mode de réalisation, on insère le préambule d'une adresse de localisation de ressources dans un deuxième enregistrement NDEF et l'identifiant (chiffré) est inséré dans le premier enregistrement NDEF : ce deuxième mode de réalisation est plus sécurisé dans la mesure où l'identifiant peut être chiffré dans le premier enregistrement NDEF, puis déchiffré par le terminal de communication, qui est seul à pouvoir se rendre à l'adresse de localisation pour obtenir le reçu.

Dans un troisième mode de réalisation, l'identifiant unique est accolé à un préambule d'une adresse de localisation de ressources (de type URL) et constitue ainsi le lien, qui est chiffré avec une clé publique du terminal de communication et transmis, dans l'enregistrement NDEF. Le terminal de communication déchiffre les données de l'enregistrement NDEF et obtient (télécharge) la ressource disponible à l'adresse de localisation de ressources.

Le préambule d'adresse de localisation de ressource est fourni par le terminal de paiement. La manière dont le terminal de paiement obtient ce préambule varie en fonction des modes de réalisation. Cependant, comme cela est décrit par la suite, un terminal de paiement selon l'invention comprend, a minima, un processeur de traitement sécurisé et un processeur de traitement général. Ces deux processeurs font l'objet d'une configuration, au moment de l'installation du terminal de paiement (par exemple pour une borne de paiement autonome). Lors de cette configuration, avantageusement, une application de traitement est configurée pour fournir ou obtenir (par l'intermédiaire d'une requête réalisée auprès d'un serveur), le préambule d'adresse de localisation de ressource qui est utilisée pour former l'adresse de localisation de ressource complète.

Lorsque l'ensemble des données est obtenu et traité, un message NDEF est inséré dans le signal NFC transmis au terminal de communication. Le terminal de communication, sur réception de ce signal (et du message NDEF qu'il contient) :
- extrait l'identifiant (chiffré ou non) issu d'un enregistrement NDEF; et/ou
- extrait l'adresse de localisation de ressources (chiffré ou non) issu d'un enregistrement NDEF;
- optionnellement, si l'identifiant ou l'adresse est chiffré avec une clé publique du terminal de communication, il déchiffre cet identifiant ou cette adresse ;
- optionnellement, si un préambule d'adresse de localisation de ressource est présent de manière indépendante, il extrait ce préambule.
En fonction des modes de réalisation décrits :
- lorsqu'une adresse de localisation de ressource complète est formée à l'aide des données reçues du message NDEF, le terminal de communication obtient la ressource pointée à cette adresse : il s'agit d'un reçu complet de paiement et/ou de défiscalisation comprenant l'ensemble des données nécessaires à ce type de document;
- lorsque seul un identifiant est présent, le terminal obtient, par d'autres canaux, une adresse de localisation de ressources, éventuellement en fonction de l'identifiant (déchiffré), et obtient la ressource pointée à cette adresse, qui comme précédemment est un reçu complet de paiement et/ou de défiscalisation comprenant l'ensemble des données nécessaires à ce type de document.

Ainsi, le terminal de paiement dispose, quasi immédiatement après la transaction, d'un reçu de paiement (de défiscalisation). L'utilisateur est donc en mesure d'obtenir une preuve de paiement (et/ou de défiscalisation) très rapidement, sans intervention particulière de sa part.

Dans un autre mode de réalisation, plutôt orienté vers l'obtention d'un reçu de paiement, le terminal de paiement forme directement un message NDEF, comprenant une pluralité d'enregistrements NDEF : ces enregistrements comprennent l'intégralité des données du reçu de paiement. Le message NDEF est transmis, par l'intermédiaire du signal NFC au terminal de communication qui décode ce signal, extrait les données du message NDEF et construit, par exemple sous la forme d'un fichier de type PDF, un reçu de paiement propre à être enregistré au sein du terminal de communication.

De son côté, l'application de paiement (le wallet) installé dans le terminal de communication comprend des fonctionnalités lui permettant d'obtenir et de traiter les données obtenues. D'une part l'application comprend des moyens de réception de signaux NFC concomitamment à la mise en oeuvre d'une transaction de paiement; l'application comprend également des moyens de traitement de messages NDEF en provenance du terminal de paiement et ces moyens de gestion de ces données NDEF : construction d'en reçu et/ou téléchargement de ressources en provenance d'un serveur tiers (accessible par l'intermédiaire de l'adresse de localisation de ressources).

### 5.3. Autres caractéristiques et avantages

On décrit, en relation avec la figure 4, un terminal de paiement (TP) mis en oeuvre pour gérer, la transmission, au moment de la transaction, de données de paiement à un terminal de communication (TC), selon le procédé décrit préalablement.

Par exemple, le terminal de paiement (TP) comprend une mémoire 41 comprenant par exemple une mémoire tampon, un processeur de traitement général 42, équipée par exemple d'un microprocesseur, et pilotée par un programme d'ordinateur 43, et/ou une mémoire sécurisée 44, un processeur de traitement sécurisé 45, pilotée par un programme d'ordinateur 46, ces unités de traitement mettant en oeuvre des procédés de traitement de données tels que décrits précédemment pour effectuer des traitements de préparation et de transmission de données à un terminal de communication (TC) utilisé pour effectuer un paiement auprès du terminal de paiement (TP).

À l'initialisation, les instructions de code du programme d'ordinateur 46 sont par exemple chargées dans une mémoire avant d'être exécutées par le processeur de traitement sécurisé 45. Le processeur de traitement 45 reçoit en entrée au moins une donnée représentative d'un paiement à effectuer. Le processeur de traitement sécurisé 45 met en oeuvre les étapes du procédé de transmission, selon les instructions du programme d'ordinateur 46 pour obtenir une donnée d'identification issue, directement ou non, de la transaction de paiement, et effectuer la préparation et la transmission d'une structure de données au terminal de communication (TC) avant la finalisation de la transaction de paiement.

Pour cela, le terminal de paiement (TP) comprend, outre la mémoire 44, des moyens de communications, tels que des modules de communication réseau, des moyens de transmission de données et des circuits de transmission de données entre les divers composants du terminal.

Les moyens précédemment décrits peuvent se présenter sous la forme d'un processeur particulier et/ou de circuit implémenté au sein d'un dispositif spécifique implanté au sein du terminal de paiement(TP). Selon un mode de réalisation particulier, le terminal de paiement (TP) met en oeuvre une application particulière qui est en charge de la réalisation des opérations précédemment décrites, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur. Le fonctionnement du terminal de paiement est amélioré en permettant de réduire la quantité de composants physiques d'un tel terminal, car il n'a plus besoin de moyens d'impression, ni de moyens d'entrée de données (il n'a pas besoin de clavier pour entrer dans son données personnelles). De plus, la transaction est traitée de manière plus fluide que la transaction précédente, ce qui permet de réduire la consommation électrique du terminal de paiement. Globalement, les moyens utilisés par le terminal de paiement peuvent être spécifiquement construits pour améliorer le fonctionnement du terminal. Le processeur sécurisé et les interfaces de mémoire et de communication peuvent être agencés pour réaliser la transaction et délivrer le ticket de manière sécurisée pour éviter le piratage.

On décrit, en relation avec la figure 5, un terminal de communication (TC) mis en oeuvre pour obtenir des données relatives à une transaction depuis un terminal de paiement (TP), selon le procédé décrit préalablement.

Par exemple, le terminal de communication (TC) comprend une mémoire 51 comprenant par exemple une mémoire tampon, un processeur de traitement général 52, équipée par exemple d'un microprocesseur, et pilotée par un programme d'ordinateur 53, et/ou une mémoire sécurisée 54, un processeur de traitement sécurisé 55, pilotée par un programme d'ordinateur 56, ces unités de traitement mettant en oeuvre des procédés de traitement de données tels que décrits précédemment pour un reçu représentatif de la transaction préalablement à la finalisation, par le terminal de paiement (TP) de la transaction.

À l'initialisation, les instructions de code du programme d'ordinateur 56 sont par exemple chargées dans une mémoire avant d'être exécutées par le processeur de traitement sécurisé 55. Le processeur de traitement 55 reçoit en entrée au moins une donnée représentative d'un identifiant, éventuellement découlant de l'identifiant de transaction. Le processeur de traitement sécurisé 55 met en oeuvre les étapes du procédé de traitement, selon les instructions du programme d'ordinateur 56 pour obtenir, à partir de cet identifiant, des données représentative de la transaction (reçu de paiement, reçu de défiscalisation).

Pour cela, le terminal de communication (TC) comprend, outre la mémoire 55, des moyens de communications, tels que des modules de communication réseau, des moyens de transmission de données et des circuits de transmission de données entre les divers composants du terminal de communication.

Les moyens précédemment décrits peuvent se présenter sous la forme d'un processeur particulier et/ou de circuits implémentés au sein d'un dispositif spécifique implanté au sein du terminal de communication. Selon un mode de réalisation particulier, le terminal de communication (TC) met en oeuvre une application particulière qui est en charge de la réalisation des opérations précédemment décrites, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur. Le fonctionnement du terminal de communication est constitué par le temps passé par l'utilisateur à des fins de récupération. De plus, la transaction est traitée différemment de la transaction précédente, ce qui réduit la consommation du terminal.

## Revendications

1. Procédé de traitement transactionnel, procédé du type consistant à transmettre, à un terminal de communication (TC) un reçu relatif à une transaction de paiement au cours de la mise en oeuvre de cette transaction de paiement par un terminal de paiement (TP), procédé **caractérisé en ce qu'**il comprend, au niveau du terminal de paiement :
- une étape d'obtention (E01) d'une donnée représentative d'une fin de transaction (DRFT) ;
- une étape de construction (E02) d'une structure de données (StrD) en fonction d'une donnée de ladite transaction (DRFT), ladite structure de données étant représentative d'un reçu comprenant :
o une étape de détermination d'une adresse de localisation de ressource (@LR) à laquelle ledit reçu est disponible en fonction de la donnée représentative d'une fin de transaction (DRFT) ;
o une étape d'insertion de ladite adresse de localisation de ressource (@LR) au sein d'un enregistrement (StrD) ;
- une étape de transmission (E03) d'un signal (S) comprenant au moins ladite structure de donnée (StrD) ;
- postérieurement à l'étape de transmission (E03), une étape de finalisation (E04) de la transaction, comprenant la transmission d'une donnée de finalisation à transmettre à un utilisateur.

2. procédé selon la revendication 1, **caractérisé en ce que** ledit enregistrement (StrD) est un enregistrement NDEF.

3. Procédé selon la revendication 1, **caractérisé en ce que** l'étape de détermination d'une adresse de localisation de ressource (@LR) comprend :
- une étape d'obtention d'un préambule d'adresse de localisation de ressource (P@LR) ;
- une étape d'obtention, à partir de la donnée de ladite transaction (DRFT), d'un identifiant de reçu (IdRcpt) ;
- une étape de concaténation du préambule de d'adresse de localisation de ressource (P@LR) et de identifiant de reçu, délivrant l'adresse de localisation de ressource (@LR).

4. Procédé selon la revendication 1, **caractérisé en ce que**, préalablement à une étape d'insertion de ladite adresse de localisation de ressource (@LR) au sein d'un enregistrement (StrD), le procédé comprend une étape de chiffrement d'au moins une portion de l'adresse de localisation de ressource à l'aide d'une clé publique du terminal de communication.

5. Procédé selon la revendication 1, **caractérisé en ce qu'**il comprend, préalablement à l'étape d'obtention (E01) de la donnée représentative d'une fin de transaction (DRFT) :
- une étape d'émission, à destination d'un terminal de communication (TC) d'un utilisateur, d'une requête d'obtention de données de paiement (DPt) ;
- une étape de réception, en provenance du terminal de communication (TC), des données de paiement ;
- une étape de création d'une transaction de paiement, à l'aide desdites données de paiement (DPt) et d'au moins une donnée dudit terminal de paiement ;
- une étape de validation de la transaction de paiement, délivrant la donnée représentative d'une fin de transaction (DRFT).

6. Procédé selon la revendication 3, **caractérisé en ce qu'**il comprend :
- une étape de transmission, à un serveur marchand (SM), de l'identifiant de reçu (IdRcpt) ;
- une étape de transmission, au serveur marchand (SM), de données de la transaction, appartenant au groupe comprenant :
- le montant de la transaction ;
- l'objet de la transaction ;
- le bénéficiaire de la transaction ;
- la date et l'heure de la transaction ;
- le lieu de la transaction ;
- au moins une donnée de paiement (DPt).

7. Procédé selon la revendication 1, **caractérisé en ce que** ledit reçu est un reçu de défiscalisation transmis à la suite d'un paiement représentatif d'un don réalisé sur le terminal de paiement, ledit terminal de paiement étant un terminal autonome sans surveillance.

8. Terminal de paiement, comprenant des moyens de mise en oeuvre d'un procédé de traitement transactionnel et notamment des moyens de transmission, à un terminal de communication (TC), d'un reçu relatif à une transaction de paiement, terminal de paiement (TP) **caractérisé en ce qu'**il comprend :
- des moyens d'obtention (E01) d'une donnée représentative d'une fin de transaction (DRFT) ;
- des moyens de construction (E02) d'une structure de données (StrD) en fonction d'une donnée de ladite transaction (DRFT) comprenant :
o des moyens de détermination d'une adresse de localisation de ressource (@LR) à laquelle ledit reçu est disponible en fonction de la donnée représentative d'une fin de transaction (DRFT) ;
o des moyens d'insertion de ladite adresse de localisation de ressource (@LR) au sein d'un enregistrement (StrD) ;
- des moyens de transmission (E03) d'un signal (S) comprenant au moins ladite structure de donnée (StrD) ;
- des moyens de finalisation (E04) de la transaction, comprenant des moyens de transmission d'une donnée de finalisation à un utilisateur.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de traitement selon la revendication 1, lorsqu'il est exécuté sur un ordinateur.
